(19) Europäisches Patentamt
European Patent Office
Office européen des brevets

(11) **EP 3 632 785 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(51) Int Cl.:
***B62L 3/02*** *(2006.01)*   ***B60T 8/17*** *(2006.01)*
***B60T 11/20*** *(2006.01)*

(21) Anmeldenummer: **19191210.4**

(22) Anmeldetag: **12.08.2019**

(54) **BREMSHEBELVORRICHTUNG**

BRAKE LEVER DEVICE

DISPOSITIF DE LEVIER DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2018 DE 102018216972**

(43) Veröffentlichungstag der Anmeldung:
**08.04.2020 Patentblatt 2020/15**

(73) Patentinhaber: **Robert Bosch GmbH**
**70442 Stuttgart (DE)**

(72) Erfinder: **Moia, Alessandro**
**71088 Holzgerlingen (DE)**

(56) Entgegenhaltungen:
CA-A1- 3 032 275     DE-A1-102004 046 940
US-A1- 2015 329 094

EP 3 632 785 B1

## Beschreibung

### Stand der Technik

Die vorliegende Erfindung betrifft eine Bremshebelvorrichtung eines Zweirads, insbesondere eines Fahrrads. Mit der Bremshebelvorrichtung ist vorteilhafterweise eine Bremsanlage des Zweirads betätigbar. Außerdem betrifft die Erfindung ein Verfahren zum Ansteuern einer Bremshebelvorrichtung. Schließlich betrifft die Erfindung ein Zweirad, umfassend eine derartige Bremshebelvorrichtung. Insbesondere weist die Bremshebelvorrichtung eine hydraulische Übersetzung auf.

Aus dem Stand der Technik sind Lösungen bekannt, die ein Blockieren eines gebremsten Rads eines Zweirads, insbesondere eines Fahrrads, verhindern. Dazu wird über einen Aktuator eine Kraft generiert, die gegen eine Handkraft des Fahrers wirkt, mit dem der Fahrer einen Bremshebel betätigt. Beispielsweise ist eine solche Funktionalität in den Anmeldungen DE 41 31 864 A1, FR 2 738 207 A1, FR 2 738 204 A1 und WO 2014/166336 A1 durch einen Elektromotor umgesetzt, der direkt am Bremshebel eine Gegenkraft zu der Handkraft des Fahrers generiert. Auf diese Weise lässt sich ein gesamtes Bremsmoment modulieren. In den Anmeldungen US 4, 315, 659 A, US 4, 456, 310 A und US 4, 494, 800 A wird ein ähnliches Prinzip realisiert. In diesem Fall wird die Gegenkraft anstatt durch einen Elektromotor durch hydraulische Komponenten aufgebracht. In der Offenlegungsschrift DE 10 2004 046 940 A1 ist eine hydraulische Zweiradbremse mit Blockierverhinderer offenbart, die keine Fremdenergie zum Volumenausgleich der Druckkammer des Hauptzylinders benötigt.

Solche Systeme, die direkt in einen Bremshebel integriert sind, benötigen Elektromotoren oder hydraulische Komponenten, die in der Lage sind, hohe Kräfte zu generieren. Diese Kräfte müssen einer Handkraft des Fahrers entgegenwirken, die bis zu 300 N oder 400 N betragen kann. Darüber hinaus muss eine generierte Kraft mit hoher Dynamik zur Verfügung gestellt werden, da das Bremsmoment innerhalb kürzester Zeit abgebaut werden muss, um zuverlässig ein Blockieren des gebremsten Rads zu verhindern. Dies hat zur Folge, dass eine hohe Leistungsaufnahme notwendig ist.

### Offenbarung der Erfindung

Die Bremshebelvorrichtung gemäß der vorliegenden Erfindung erlaubt ein sicheres und zuverlässiges Vermeiden von blockierenden gebremsten Rädern, während gleichzeitig ein geringer Energieverbrauch erreicht ist. Insbesondere wird dies durch den Einsatz einer variablen hydraulischen Übersetzung zwischen einem Bremshebel und einer Bremsleitung erreicht. Auf diese Weise lässt sich Energie, die in der Bremsleitung gespeichert ist, ausnutzen, um eine Modulation des Bremsdrucks zu generieren. Dadurch ist es möglich, ein pumpenloses System bereitzustellen, das lediglich auf einer Verschaltung verschiedener Ventile basiert, und dadurch einen sehr geringen Energiebedarf aufweist. Besonders vorteilhaft lassen sich außerdem höhere Bremsdruck-Reduktionszyklen erreichen als dies bei anderen gängigen pumpenlosen Systemen der Fall ist.

Die Bremshebelvorrichtung eines Zweirads weist einen Bremshebel auf, der mit einem ersten Kolben und einem zweiten Kolben gekoppelt ist. Der erste Kolben ist insbesondere in einem ersten Fluidzylinder geführt, während der zweite Kolben in einem zweiten Fluidzylinder geführt ist. Der Bremshebel ist durch einen Benutzer des Zweirads betätigbar, sodass durch Betätigen des Bremshebels der erste Kolben im ersten Fluidzylinder und der zweite Kolben im zweiten Fluidzylinder bewegt werden kann. Des Weiteren weist die Bremshebelvorrichtung eine Ventilvorrichtung auf. Die Ventilvorrichtung wiederum umfasst ein erstes Ventil und ein zweites Ventil, wobei durch die Ventilvorrichtung der zweite Kolben wahlweise drucklos schaltbar und mit einem in einer Bremsleitung vorherrschenden Druck beaufschlagbar ist. Die Bremsleitung ist außerdem direkt mit einer ersten Druckkammer des ersten Fluidzylinders verbunden. Somit herrscht in der ersten Druckkammer des ersten Fluidzylinders stets der Druck vor, der auch in der Bremsleitung vorhanden ist. Durch das Vorsehen des ersten Ventils und des zweiten Ventils als Ventilvorrichtung ist insbesondere eine hydraulische Übersetzung zwischen Bremshebel und Bremsleitung variierbar. Damit lässt sich einfach und aufwandsarm ein in der Bremsleitung vorherrschender Bremsdruck modulieren, in dem das hydraulische Übersetzungsverhältnis moduliert wird. Dies wird erreicht, indem der zweite Kolben wechselseitig zwischen dem drucklosen Zustand und dem Zustand, in dem auf den zweiten Kolben der in der Bremsleitung vorherrschende Bremsdruck wirkt, geschaltet wird. Somit kann durch Zuschalten und Wegschalten des zweiten Kolbens bei gleicher Betätigungskraft des Hebels durch einen Benutzer ein in der Bremsleitung generierter Bremsdruck variiert werden.

Die Unteransprüche haben bevorzugte Weiterbildungen der Erfindung zum Inhalt.

Bevorzugt ist vorgesehen, dass das erste Ventil zum wahlweisen Verbinden und Trennen einer zweiten Druckkammer des zweiten Fluidzylinders und der Bremsleitung ausgebildet ist. Das zweite Ventil ist insbesondere zum wahlweisen Verbinden und Trennen der zweiten Druckkammer und eines Vorratstanks ausgebildet. Der zweite Fluidzylinder weist somit, analog zu dem ersten Fluidzylinder, eine zweite Druckkammer auf. Die zweite Druckkammer dient zum Generieren eines Drucks, in dem der zweite Kolben in dem zweiten Fluidzylinder bewegt wird, analog zu einem Bewegen des ersten Kolbens in dem ersten Fluidzylinder zum Generieren eines Drucks in der ersten Druckkammer. Ist diese zweite Druckkammer durch das erste Ventil mit der Bremsleitung verbunden, so herrscht in der zweiten Druckkammer der in der Bremsleitung anliegende Bremsdruck. Damit ist der erste Kolben mit dem Bremsdruck beaufschlagt.

Gleichzeitig ist insbesondere vorgesehen, dass durch das zweite Ventil die zweite Druckkammer von dem Vorratstank getrennt ist. In einer anderen Schaltstellung kann das erste Ventil die erste Druckkammer von der Bremsleitung trennen und das zweite Ventil die zweite Druckkammer mit dem Vorratstank verbinden. In diesem Fall ist der zweite Kolben drucklos geschaltet.

Besonders vorteilhaft ist vorgesehen, dass die erste Druckkammer und die zweite Druckkammer direkt mit dem Vorratstank verbunden sind. Durch den ersten Kolben ist die Verbindung zwischen erster Druckkammer und Vorratstank trennbar, wobei durch den zweiten Kolben die Verbindung zwischen zweiter Druckkammer und Vorratstank trennbar ist. Insbesondere ist die Verbindung zwischen den jeweiligen Druckkammern und dem Vorratstank in einer Zylinderwand des Fluidzylinders angebracht, wobei der erste Kolben oder zweite Kolben verfahren werden kann, um besagte Öffnung abzudecken. Sobald die Öffnung abgedeckt ist, weist die erste Druckkammer keine Verbindung mehr zu dem Vorratstank auf. Die zweite Druckkammer ist durch das zweite Ventil wahlweise mit dem Vorratstank verbindbar.

In einer alternativen Ausgestaltung ist vorgesehen, dass das erste Ventil zum wahlweisen Verbinden und Trennen einer dritten Druckkammer des zweiten Fluidzylinders und eines Vorratstanks vorgesehen ist. Das zweite Ventil ist vorteilhafterweise zum wahlweisen Verbinden und Trennen einer vierten Druckkammer des zweiten Fluidzylinders und der dritten Druckkammer ausgebildet. Die vierte Druckkammer ist durch den zweiten Kolben von der dritten Druckkammer getrennt und direkt mit der Bremsleitung verbunden. Somit herrscht in der vierten Druckkammer stets der in der Bremsleitung anliegende Bremsdruck. Um den zweiten Kolben in einem solchen Zustand dennoch drucklos schalten zu können, ist durch das zweite Ventil die dritte Druckkammer mit der vierten Druckkammer verbindbar. Da sich die dritte Ventilkammer und die vierte Ventilkammer auf unterschiedlichen Seiten des zweiten Kolbens befinden, ist der Kolben drucklos geschaltet, wenn in der dritten Druckkammer und in der vierten Druckkammer der gleiche Druck anliegt. Ist hingegen eine Verbindung zwischen dritter Druckkammer und vierter Druckkammer durch das zweite Ventil getrennt, während das erste Ventil die dritte Druckkammer mit dem Vorratstank verbindet, so ist der zweite Kolben mit dem in der Bremsleitung vorherrschenden Druck beaufschlagt. Somit kann auch in dieser Ausgestaltung von erstem Ventil und zweitem Ventil die zuvor beschriebene Funktionalität der Ventilvorrichtung erreicht werden.

Besonders vorteilhaft ist vorgesehen, dass die erste Druckkammer direkt mit dem Vorratstank verbunden ist, wobei die Verbindung zwischen erster Druckkammer und Vorratstank durch den ersten Kolben trennbar ist. Eine analoge direkte Verbindung zwischen dritter Druckkammer und/oder vierter Druckkammer und Vorratstank ist nicht vorgesehen. Das Trennen der Verbindung zwischen erster Druckkammer und Vorratstank durch den Kolben erfolgt insbesondere derart, dass der Kolben durch eine Bewegung innerhalb des Fluidzylinders eine Öffnung in einer Zylinderwand des Fluidzylinders abdeckt.

In einem Normalbetrieb der Bremshebelvorrichtung ist vorgesehen, dass das erste Ventil geschlossen und das zweite Ventil geöffnet ist. Soll hingegen ein Betrieb zum Vermeiden eines Blockierens eines gebremsten Rads ausgeführt werden, so erfolgt ein Ändern der Schaltzustände von erstem Ventil und zweitem Ventil, wodurch die gesamte Kolbenfläche aufgrund des Zuschaltens des zweiten Kolbens vergrößert wird. Damit kann bei einer gleichen Betätigungskraft des Bremshebels durch einen Benutzer eine geringere Bremskraft generiert werden, sodass durch das Zuschalten des zweiten Kolbens ein in der Bremsleitung anliegender Bremsdruck verringert werden kann. Durch das Verringern des Bremsdrucks kann insbesondere eine Blockade des gebremsten Rads aufgehoben werden.

Der erste Kolben und der zweite Kolben sind vorteilhafterweise an demselben Kontaktpunkt an dem Bremshebel befestigt. Somit üben beide Kolben eine gemeinsame hydraulische Rückstellkraft auf den Bremskolben aus. Die Bremshebelvorrichtung ist dann sehr einfach herstellbar und ansteuerbar, um den Bremsdruck zu reduzieren.

In einer alternativen Ausgestaltung ist vorgesehen, dass der erste Kolben an einem ersten Kontaktpunkt und der zweite Kolben an einem zweiten Kontaktpunkt an dem Bremshebel befestigt ist. Durch einen Abstand zwischen erstem Kontaktpunkt und zweitem Kontaktpunkt ist ein zusätzlicher Parameter realisiert, durch den eine Charakteristik des Bremsdruckabbaus durch Zuschalten oder Wegschalten des zweiten Kolbens variiert werden kann.

Die Erfindung betrifft außerdem ein Zweirad, das insbesondere ein Fahrrad ist. Das Zweirad umfasst eine Bremshebelvorrichtung wie zuvor beschrieben. Dabei ist vorgesehen, dass die Bremshebelvorrichtung über eine Bremsleitung mit einer Bremsvorrichtung gekoppelt ist. Die Bremsvorrichtung umfasst insbesondere einen Bremssattel und eine Bremsscheibe, sodass die Bremsvorrichtung zum Bremsen eines Rads des Zweirads ausgebildet ist. Durch die Ausgestaltung der Bremshebelvorrichtung, die einen Bremsdruckabbau ermöglicht, ist insbesondere eine Regelung implementierbar, die ein Blockieren des Rads während einer Bremsung verhindert. Eine solche Regelung ist dabei sehr energiearm, da lediglich ein Umschalten von erstem Ventil und zweitem Ventil zu erfolgen hat. Insbesondere ist kein Aktuator notwendig, der gegen eine Handkraft, die von einem Benutzer des Zweirads auf den Bremshebel aufgebracht wird, arbeitet. Dies ermöglicht insbesondere ein schnelles Abbauen des Bremsdrucks sowie eine minimierte Energieaufnahme.

Die Erfindung betrifft außerdem ein Verfahren zum Ansteuern einer Bremshebelvorrichtung wie zuvor beschrieben. Dazu ist vorgesehen, dass auf den Bremshebel eine Handkraft durch den Benutzer aufgebracht ist, wodurch an dem Bremshebel ein Handmoment wirkt. Diese Handkraft bringt der Benutzer auf, um eine Bremsung eines Rads des Zweirads einzuleiten. Das Verfahren ist vorgesehen, um ein Blockieren des gebremsten Rads zu verhindern. Insbesondere umfasst das Verfahren ein Reduzieren eines Bremsdrucks in der Bremsleitung durch Schließen des zweiten Ventils und Öffnen des ersten Ventils. Durch das Schließen des zweiten Ventils und das Öffnen des ersten Ventils erfolgt insbesondere ein Beaufschlagen des zweiten Kolbens mit dem Bremsdruck, der in der Bremsleitung vorherrscht. Dadurch wird derselbe Bremsdruck auf eine größere Kolbenfläche aufgeteilt, sodass eine hydraulische Rückstellkraft, die von erstem Kolben und zweitem Kolben auf den Bremshebel übertragen wird, ansteigt. Somit ist bei gleicher Handkraft nur eine geringere hydraulische Rückstellkraft im Gleichgewicht, sodass der Bremsdruck sinken muss, bis die Handkraft und die verringerte hydraulische Rückstellkraft ein neues Gleichgewicht einstellen.

Bevorzugt ist vorgesehen, dass das Öffnen des ersten Ventils nach dem Schließen des zweiten Ventils erfolgt. Da durch ein gleichzeitiges Öffnen von erstem Ventil und zweitem Ventil die Gefahr besteht, dass die Bremsleitung direkt mit dem Vorratstank verbunden wird, würde eine Stellung, in der sowohl das erste Ventil als auch das zweite Ventil geöffnet ist, ein Bremsdruck unmittelbar bis auf 0 abgebaut werden. Um dies zu verhindern, erfolgt das Aktuieren von erstem Ventil und zweitem Ventil nacheinander, sodass stets Vorratstank und Bremsleitung getrennt bleiben.

Bevorzugt erfolgt außerdem ein Schritt eines Haltens des Bremsdrucks nach der Reduzierung des Bremsdrucks. Dies wird insbesondere durch ein Schließen des ersten Ventils erreicht, während das zweite Ventil in dem geschlossenen Zustand verbleibt. Dadurch kann sich der Bremsdruck nicht weiter verringern oder erhöhen und wird somit in einem aktuellen Zustand beibehalten.

Schließlich ist besonders vorteilhaft ein Schritt des Erhöhens des Bremsdrucks nach dem Halten des Bremsdrucks dadurch vorgesehen, dass das zweite Ventil geöffnet wird, während das erste Ventil geschlossen bleibt. Somit ist insbesondere ermöglicht, einen wiederholenden Zyklus aus reduzieren, Halten und Erhöhen des Bremsdrucks durchzuführen, um somit den Bremsdruck innerhalb der Bremsleitung zu modulieren. Damit lässt sich auch die Bremskraft modulieren, mit der das Rad gebremst wird. Somit ist insbesondere eine Regelung ausführbar, in der ein Stillstand und damit Blockieren des Rads während der Bremsung verhindert ist.

Daher ist besonders bevorzugt vorgesehen, dass zunächst ein Stillstand eines Rads, das durch die mit der Bremshebelvorrichtung verbundene Bremsvorrichtung bremsbar ist. Im Ansprechen auf den erkannten Stillstand des Rads erfolgt insbesondere ein wiederholtes Ausführen der Schritte des Reduzierens, Haltens und Erhöhens des Bremsdrucks in der Bremsleitung, um somit den Stillstand des Rads zu vermeiden. Die Zeitdauer, über die diese einzelnen Schritte Reduzieren, Halten und Erhöhen ausgeführt werden, lassen sich dabei je nach aktueller Gegebenheit variabel einstellen. Insbesondere erfolgt ein Reduzieren so lange, bis kein Stillstand des Rads mehr detektiert werden kann. Der Schritt des Haltens wird lediglich als Übergangsschritt angesehen, sodass unmittelbar nach dem Reduzieren ein Erhöhen des Bremsdrucks erfolgen kann, um eine maximale Bremskraft sicherzustellen. Sobald wiederum ein Blockieren des Rads erkannt wurde, erfolgt ein neuerliches Reduzieren des Bremsdrucks. Damit ist das Rad optimal bremsbar, wobei das Zweirad für den Benutzer weiterhin handhabbar, insbesondere lenkbar, bleibt.

Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1    eine schematische Ansicht eines Zweirads gemäß einem Ausführungsbeispiel der Erfindung,

Figur 2    eine schematische Ansicht einer Bremshebelvorrichtung gemäß einem Ausführungsbeispiel der Erfindung,

Figur 3    eine erste schematische Ansicht der Bremshebelvorrichtung gemäß dem Ausführungsbeispiel der Erfindung in einem Normalbetrieb,

Figur 4    eine zweite schematische Ansicht der Bremshebelvorrichtung gemäß dem Ausführungsbeispiel der Erfindung während eines Druckabbaus,

Figur 5    eine schematische Ansicht der Bremshebelvorrichtung gemäß dem Ausführungsbeispiel der Erfindung während eines Haltens des Bremsdrucks,

Figur 6    eine schematische Ansicht einer Bremshebelvorrichtung gemäß einem zweiten Ausführungsbeispiel der Erfindung, und

Figur 7    eine schematische Ansicht einer Bremshebelvorrichtung gemäß einem dritten Ausführungsbeispiel der Erfindung.

Ausführungsformen der Erfindung

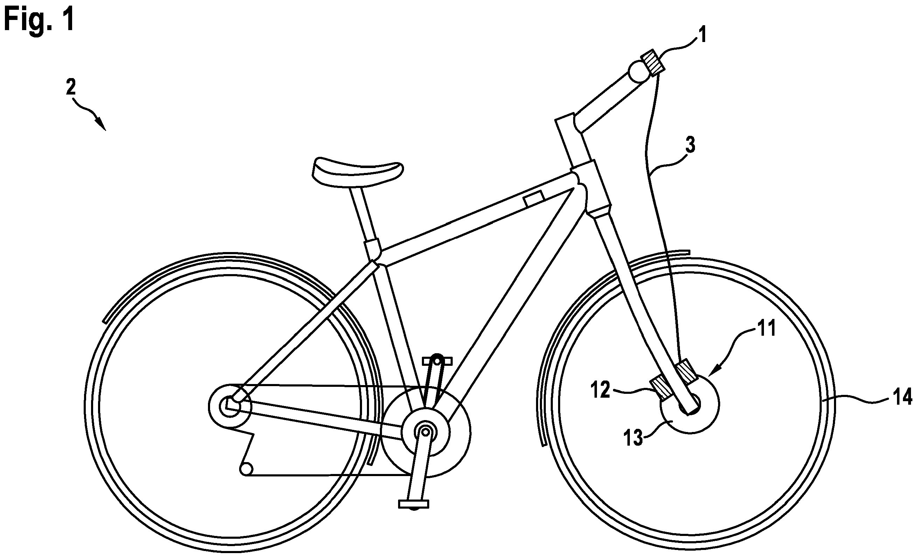

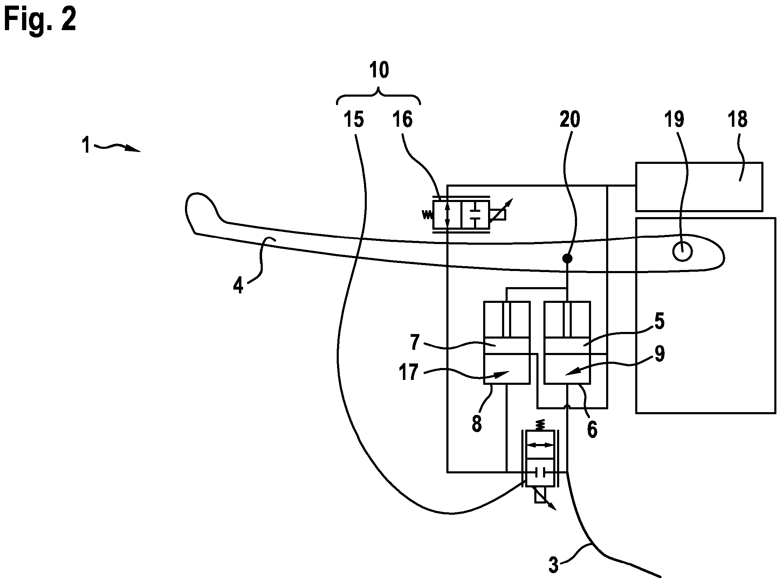

Figur 1 zeigt schematisch ein Zweirad 2 in Form eines Fahrrads. Das Zweirad 2 umfasst eine Bremshebelvorrichtung 1 gemäß einem Ausführungsbeispiel der Erfindung, die nachfolgend mit Bezug auf die Figuren 2 bis 7 erklärt wird.

Die Bremshebelvorrichtung 1 ist über eine Bremsleitung 3 mit einer Bremsvorrichtung 11 verbunden, wobei die Bremsvorrichtung 11 einen Bremssattel 12 und eine Bremsscheibe 13 umfasst. Über die Bremsvorrichtung 11 ist ein Rad 14 des Zweirads 2 bremsbar. Insbesondere ist dabei sichergestellt, dass ein Blockieren des Rads 14 stets verhindert ist, sodass das Zweirad 2 während eines Bremsvorgangs stets handhabbar, insbesondere lenkbar ist.

Figur 2 zeigt schematisch eine Bremshebelvorrichtung 1 gemäß einem ersten Ausführungsbeispiel der Erfindung. Die Bremshebelvorrichtung 1 umfasst einen Bremshebel 4, der durch einen Benutzer des Zweirads 2 aktuierbar ist. Der Bremshebel 4 ist an einem Lagerpunkt 19 drehbar gelagert und an einem Kontaktpunkt 20 mit einem ersten Kolben 5 und einem zweiten Kolben 7 verbunden. Wird der Bremshebel 4 um den Lagerpunkt 19 verdreht, so erfolgt auch ein Bewegen des ersten Kolbens 5 und des zweiten Kolbens 7 aufgrund der Verbindung über den Kontakt 20.

Der erste Kolben 5 ist in einen ersten Fluidzylinder 6 geführt, während der zweite Kolben 7 in einem Fluidzylinder 8 geführt ist. Durch den ersten Kolben 5 und den ersten Fluidzylinder 6 ist eine erste Druckkammer 9 gebildet, sowie ebenso durch den zweiten Kolben 7 und den zweiten Fluidzylinder 8 eine zweite Druckkammer 17 gebildet ist. Die erste Druckkammer 5 und die zweite Druckkammer 17 sind direkt mit einem Vorratstank 18 verbunden. Diese Verbindung ist jedoch durch eine Bewegung des ersten Kolbens 5 und des zweiten Kolbens 7 trennbar, wobei insbesondere besagte Verbindung durch eine Öffnung in einer Zylinderwand des ersten Fluidkolbens 6 und des zweiten Fluidkolbens 8 realisiert ist. Durch Bewegen des ersten Kolbens 5 und des zweiten Kolbens 7 kann der erste Kolben 5 und der zweite Kolben 7 die jeweilige Öffnung in der Zylinderwand des ersten Fluidzylinders 6 und des zweiten Fluidzylinders 8 abdecken, sodass die Verbindung zu dem Vorratstank 18 getrennt ist.

Die erste Druckkammer 9 ist außerdem direkt mit der Bremsleitung 9 gekoppelt. Somit ist ein in der Bremsleitung 3 vorherrschender Bremsdruck P stets identisch zu einem Druck innerhalb der ersten Druckkammer 9 und somit auch identisch zu einem Druck der an dem ersten Kolben anliegt.

Der zweite Kolben 7 ist über eine Ventilvorrichtung 10 wahlweise drucklos schaltbar und mit dem in der Bremsleitung 3 vorherrschenden Bremsdruck P beaufschlagbar. Dazu umfasst die Ventilvorrichtung 10 ein erstes Ventil 15 und ein zweites Ventil 16.

Das erste Ventil 15 dient zum wahlweisen Verbinden der zweiten Druckkammer 17 mit der Bremsleitung 3. Dies bedeutet, dass die Bremsleitung 3 durch das erste Ventil 15 entweder mit der zweiten Druckkammer 17 verbunden werden kann oder von der zweiten Druckkammer 17 getrennt werden kann. Das zweite Ventil 16 dient entweder zum Verbinden oder zum Trennen der zweiten Fluidkammer 17 und des Vorratstanks 18. Dies bedeutet, dass je nach Stellung des zweiten Ventils 16 die zweite Druckkammer 17 und der Vorratstank 18 verbunden sind, wodurch der zweite Kolben 7 drucklos geschaltet ist. Alternativ kann der Vorratstank 18 von der zweiten Druckkammer 17 durch eine entsprechende Schaltstellung des zweiten Ventils 16 getrennt werden.

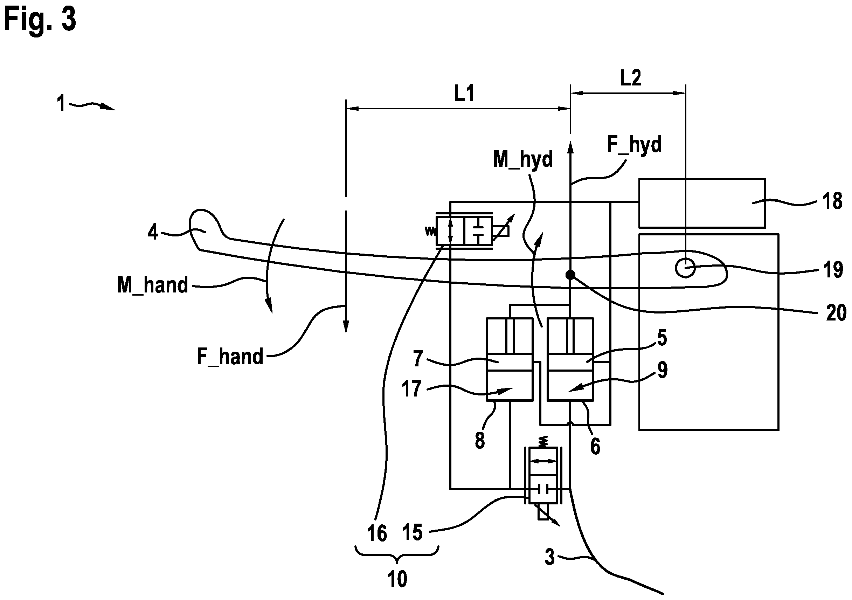

Figur 3 zeigt verschiedene Kräfte und Momente, die auf die Bremshebelvorrichtung 1 wirken, wenn sich diese in einem normalen Zustand befindet. Der Normalzustand bedeutet, dass ein Benutzer des Zweirads 2 den Bremshebel 4 betätigt, um eine Bremsung des Rads 14 einzuleiten. Dazu bringt der Benutzer eine Handkraft F_hand auf den Bremshebel auf, wobei aufgrund der drehbaren Lagerung an dem Lagerpunkt 19 die Handkraft F_hand in ein den Bremshebel 4 wirkendes Drehmoment M_hand gewandelt wird.

Durch das Aktuieren des Bremshebels 4 erfolgt ein Verschieben des ersten Kolbens 5 und des zweiten Kolbens 7. Der erste Kolben 5 generiert einen Druck innerhalb der ersten Druckkammer 9, der gleichzeitig dem in der Bremsleitung 3 anliegenden Bremsdruck P entspricht. Der auf den zweiten Kolben 7 wirkende Druck ist dabei abhängig von einer Schaltung der Ventilvorrichtung 10.

In dem Normalzustand, der in Figur 3 gezeigt ist, ist das erste Ventil 15 geschlossen und das zweite Ventil 16 geöffnet. Dies bedeutet, dass die zweite Druckkammer 17 mit dem Vorratstank 18 gekoppelt ist. Der zweite Kolben 7 ist damit unabhängig von seiner Stellung drucklos geschaltet, sodass innerhalb der zweiten Druckkammer 8 kein Druck generiert werden kann. Die Handkraft des Benutzers F_hand kann somit zum Generieren des Bremsdrucks P innerhalb der Bremsleitung 3 unter Verwendung allein des ersten Kolbens 5 verwendet werden. Somit kann der Benutzer wie gewohnt eine Bremsung des Rads 14 initiieren.

Wenn der Benutzer die Handkraft F_hand auf den Bremshebel 4 aufbringt, so ergibt sich das folgende Handmoment M_hand:

$$M\_hand = F\_hand \times (L1 + L2)$$

Durch dieses Handmoment M_hand wird der Bremshebel 4 solange um den Lagerpunkt 19 gedreht, bis der erste Kolben 5 und/oder der zweite Kolben 7 eine hydraulische Rückstellkraft F_hyd auf den Bremshebel 4 aufwirken, die ein hydraulisches Rückstellmoment M_hyd bewirkt, das dem Handmoment M_hand vollständig entgegenwirkt. Das hydraulische Gegenmoment M_hyd berechnet sich aus der hydraulischen Rückstellkraft und dem Bremsdruck P wie folgt:

$$M\_hyd = F\_hyd \times L2 = P \times A1 \times L2$$

In obiger Formel ist A1 die erste Kolbenfläche des ersten Kolbens 5. Somit ergibt sich das Momentengleichgewicht wie folgt:

$$M\_hand = M\_hyd$$

$$F\_hand \times (L1 + L2) = P \times A1 \times L2$$

Durch Umformen ergibt sich schließlich der Bremsdruck P zu:

$$P = F\_hand \times (L1 + L2) / (A1 \times L2)$$

Dabei kann (L1 + L2) durch L2 als mechanische Übersetzung des Bremshebels 4 angesehen werden, die konstant ist. Somit lässt sich die Übersetzung Ü als Konstante in die obige Formel einfügen:

$$P = F\_hand \times Ü / A1$$

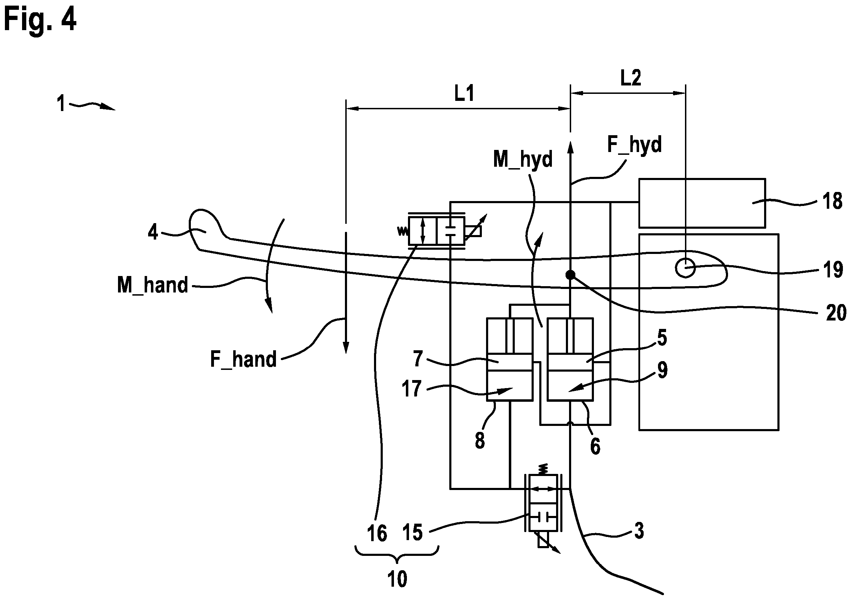

Wird ein Blockieren des Rads 14 während des Bremsens festgestellt, so muss ein Druckabbau erfolgen. Dies ist insbesondere in Figur 4 gezeigt. Zum Abbauen des Drucks wird zunächst das zweite Ventil 16 in die geschlossene Stellung überführt, unmittelbar darauf erfolgt ein Öffnen des ersten Ventils 15. Dadurch wird der zweite Kolben 7 mit dem Bremsdruck P beaufschlagt, da die zweite Druckkammer 17 mit der Bremsleitung 3 verbunden wird. Somit wirkt der Bremsdruck P nicht mehr auf der ersten Kolbenfläche A1 des ersten Kolbens 5 allein, sondern auf einer Summe aus der ersten Kolbenfläche A1 des ersten Kolbens 5 und einer zweiten Kolbenfläche A2 des zweiten Kolbens 7. Somit ergibt sich der neue Bremsdruck $P_{neu}$ zu:

$$P_{neu} = F\_hand \times Ü / (A1 + A2)$$

Somit ist der neue Bremsdruck $P_{neu}$ kleiner als der ursprüngliche Bremsdruck P, wenn vorausgesetzt wird, dass die Handkraft F_hand unveränderlich bleibt. Insbesondere kann der Bremsdruck P so weit reduziert werden, dass die Bremskraft zum Bremsen des Rads 14 verringert ist, bis das Rad 14 keinen Stillstand mehr aufweist.

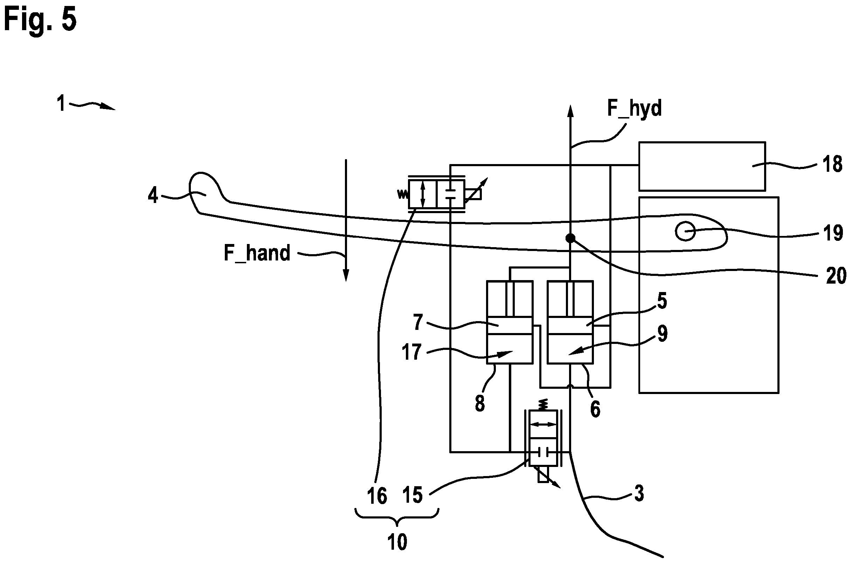

Figur 5 zeigt eine Ansicht der Bremshebelvorrichtung 1 während eines Haltens eines neu eingestellten Bremsdrucks $P_{neu}$. Hierzu wird das erste Ventil 15 geschlossen, während das zweite Ventil 16 in der geschlossenen Stellung verbleibt. Somit ist wiederum eine Verbindung zwischen Bremsleitung 3 und zweiter Druckkammer 17 getrennt, wobei der zweite Kolben 7 nicht drucklos geschaltet ist. Insbesondere kann keine weitere Angleichung des Bremsdrucks P in der Bremsleitung 3 und des in der zweiten Druckkammer 17 vorherrschenden Drucks erfolgen. Dadurch bleibt einerseits die aktuelle Stellung des Bremshebels 4, andererseits der in der Bremsleitung 3 vorherrschende Bremsdruck P konstant.

Soll ein Bremsdruck wieder aufgebaut werden, so ist lediglich das zweite Ventil 16 zu öffnen. Dies führt zu einem Drucklosschalten des ersten Kolbens 7, wodurch die zweite Kolbenfläche A2 wegfällt und die hydraulische Rückstellkraft F_hyd wieder allein aus der ersten Kolbenfläche des ersten Kolbens 5 generiert wird.

Eine solche Maßnahme zum Reduzieren und anschließenden Erhöhen des Bremsdrucks P ist einfach und aufwandswarm umsetzbar. Insbesondere ist lediglich ein Verschalten verschiedener Ventile notwendig, wobei das Aktuieren lediglich in einem Umschalten der Ventile besteht. Dies ist einfach und insbesondere energiearm durchzuführen, sodass die Regelung zum Vermeiden eines Stillstands des gebremsten Rads 14 sehr energiearm ausgeführt werden kann. Durch entsprechend kurze Schaltzyklen lässt sich insbesondere jeder beliebige Bremsdruck zwischen dem Bremsdruck P und dem neuen Bremsdruck $P_{neu}$ gemäß der vorherigen Formeln einstellen. Anhand der Systemparameter Übersetzung Ü erste Kolbenfläche A1 und zweite Kolbenfläche A2 lässt sich die Bremshebelvorrichtung 1 grundsätzlich auslegen, das heißt an Rahmenbedingungen eines Zweirads 2 anpassen.

Während des Abbaus des Bremsdrucks P erfolgt ein Wegschieben des Bremshebels 4 gegen die Handkraft F_hand, da aufgrund des Zuschaltens des zweiten Kolbens 7 die hydraulische Rückstellkraft F_hyd ansteigt. Dies hat den Vorteil, dass die abgebaute Energie in einer Verschiebung des Bremshebels 4 gespeichert ist, sodass diese bei Bedarf wieder zum Aufbau des Bremsdrucks verwendet werden kann. Somit kann die gesamte Regelung sehr energiesparend ausgeführt werden.

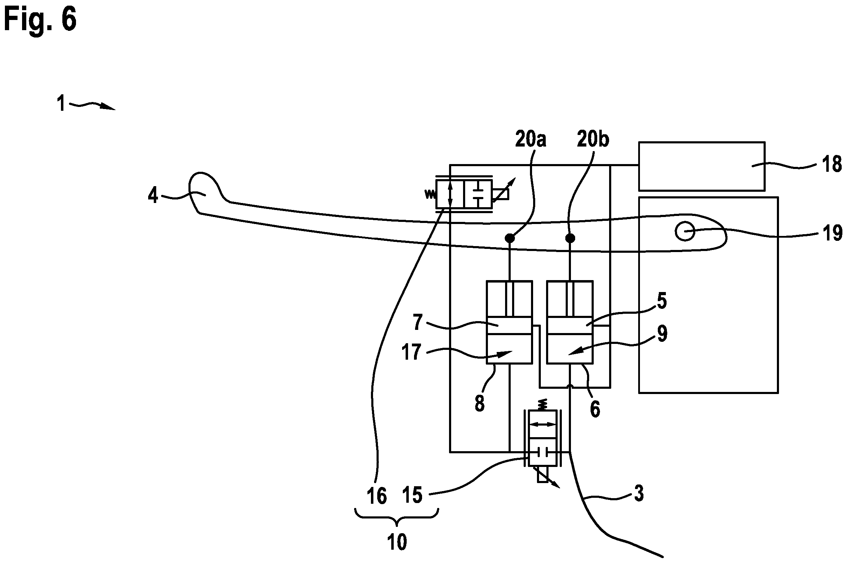

Die Figur 6 zeigt schematisch ein zweites Ausführungsbeispiel der Bremshebelvorrichtung 1. Bei diesem zweiten Ausführungsbeispiel sind der erste Kolben 5 und der zweite Kolben 6 nicht über einen gemeinsamen Kontaktpunkt 20 mit dem Bremshebel 4 gekoppelt, sondern der erste Kolben ist über einen ersten Kontaktpunkt 20a und der zweite Kolben 7 über einen zweiten Kontaktpunkt 20b an dem Bremshebel 4 befestigt. Durch den zusätzlichen Abstand zwischen erstem Kontaktpunkt 20a und dem zweiten Kontaktpunkt 20b ist ein zusätzlicher Designparameter vorhanden, um die Bremshebelvorrichtung 1 optimal auszulegen. Die Funktionsweise ist identisch wie zuvor beschrieben.

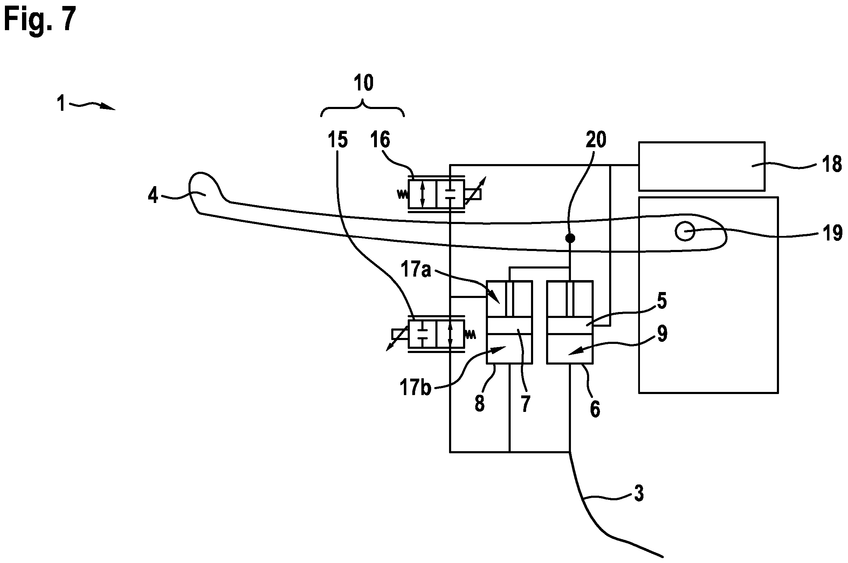

Figur 7 zeigt ein drittes Ausführungsbeispiel der Bremshebelvorrichtung 1. Hierbei sind erstes Ventil 15 und zweites Ventil 16 anders als im ersten und zweiten Ausführungsbeispiel angeordnet. So weist der zweite Fluidzylinder 8 eine dritte Druckkammer 17a und eine vierte Druckkammer 17b auf, die durch den zweiten Kolben 7 getrennt sind. Die vierte Druckkammer 17b ist dabei direkt mit der Bremsleitung 3 gekoppelt. Über das zweite Ventil kann die vierte Druckkammer 17b wahlweise mit der dritten Druckkammer 17a verbunden oder von dieser getrennt werden. Das erste Ventil 15 dient zum wahlweisen Verbinden oder Trennen von Vorratstank 18 und dritter Druckkammer 17a.

Durch die direkte Verbindung von Bremsleitung 3 und vierter Druckkammer 17b herrscht in der vierten Druckkammer 17b stets der Bremsdruck P. Ein Drucklosschalten des zweiten Kolbens 7 erfolgt durch ein Verbinden von dritter Druckkammer 17a und vierter Druckkammer 17b, sodass beidseitig des zweiten Kolbens 7 derselbe Druck herrscht. Wird das zweite Ventil 16 geschlossen und somit die dritte Druckkammer 17a von der vierten Druckkammer 17b getrennt, so kann durch Öffnen des ersten Ventils 15 die dritte Druckkammer 17a mit dem Vorratstank 18 gekoppelt werden. Damit wirkt auf den zweiten Kolben 7 nur noch einseitig der Bremsdruck P, wodurch der zweite Kolben 7 mit dem Bremsdruck P beaufschlagt ist. Somit ist eine Funktionsweise wiederum identisch zu dem ersten Ausführungsbeispiel und dem zweiten Ausführungsbeispiel. Insbesondere werden erstes Ventil 15 und zweites Ventil 16 auf dieselbe Weise verschaltet, wie zuvor beschrieben.

Um eine Bremshebelwegreserve weiter zu erhöhen, ist außerdem denkbar, bei dem Anfang jeder Bremsung das erste Ventil 15 zu öffnen, bis Bremsbeläge an die Bremsscheibe 13 angelegt sind, um mehr Bremsflüssigkeit mit weniger Bremshebelweg zu verdrängen. Sobald die Beläge an der Bremsscheibe 13 anliegen, erfolgt ein Schließen des ersten Ventils 15, um den in Figur 2 gezeigten und zuvor beschriebenen Normalzustand zu erreichen.

## Patentansprüche

1. Bremshebelvorrichtung (1) für ein Zweirad (2), aufweisend einen Bremshebel (4), der mit einem ersten Kolben (5) eines ersten Fluidzylinders (6) gekoppelt ist, wobei eine erste Druckkammer (9) des ersten Fluidzylinders (6) direkt mit einer Bremsleitung (3) verbunden ist, und wobei die Bremshebelvorrichtung (1) eine Ventilvorrichtung (10) mit einem ersten Ventil (15) und einem zweiten Ventil (16) aufweist, **dadurch gekennzeichnet, dass** der Bremshebel (4) mit einem zweiten Kolben (7) eines zweiten Fluidzylinders (8) gekoppelt ist, wobei durch die eine Ventilvorrichtung (10) der zweite Kolben (7) wahlweise drucklos schaltbar und mit einem in der Bremsleitung (3) vorherrschenden Druck beaufschlagbar ist.

2. Bremshebelvorrichtung (1) nach Anspruch 1, **dadurch gekennzeichnet, dass** das erste Ventil (15) zum wahlweisen Verbinden und Trennen einer zweiten Druckkammer (17) des zweiten Fluidzylinders (8) und der Bremsleitung (3) und das zweite Ventil (16) zum wahlweisen Verbinden und Trennen der zweiten Druckkammer (17) und eines Vorratstank (18) ausgebildet ist.

3. Bremshebelvorrichtung (1) nach Anspruch 2, **dadurch gekennzeichnet, dass** die erste Druckkammer (9) und die zweite Druckkammer (17) direkt mit dem Vorratstank (18) verbunden sind, wobei die Verbindung zwischen erster Druckkammer (9) und Vorratstank (18) durch den ersten Kolben (5) trennbar ist und wobei die Verbindung zwischen zweiter Druckkammer (17) und Vorratstank (18) durch den zweiten Kolben (7) trennbar ist.

4. Bremshebelvorrichtung (1) nach Anspruch 1, **dadurch gekennzeichnet, dass** das erste Ventil (15) zum wahlweisen Verbinden und Trennen einer dritten Druckkammer (17a) des zweiten Fluidzylinders (8) und eines Vorratstank (18) und das zweite Ventil (16) zum wahlweisen Verbinden und Trennen einer vierten Druckkammer (17b) des zweiten Fluidzylinders (8) und der dritten Druckkammer (17a) ausgebildet ist, wobei die vierte Druckkammer (17b) durch den zweiten Kolben (7) von der dritten Druckkammer (17a) getrennt ist und direkt mit der Bremsleitung (3) verbunden ist.

5. Bremshebelvorrichtung (1) nach Anspruch 4, **dadurch gekennzeichnet, dass** die erste Druckkammer (9) direkt mit dem Vorratstank (18) verbunden ist, wobei die Verbindung zwischen erster Druckkammer (9) und Vorratstank (18) durch den ersten Kolben (5) trennbar ist.

6. Bremshebelvorrichtung (1) nach einem der Ansprüche 2 oder 3, **dadurch gekennzeichnet, dass** in einem Normalbetrieb das erste Ventil (15) geschlossen und das zweite Ventil (16) geöffnet ist.

7. Bremshebelvorrichtung (1) nach einem der vorhergehenden Ansprüche, **dadurch gekennzeichnet, dass** der erste Kolben (5) und der zweite Kolben (7) an demselben Kontaktpunkt (20) an dem Bremshebel (4) befestigt sind.

8. Bremshebelvorrichtung (1) nach einem der Ansprüche 1 bis 6, **dadurch gekennzeichnet, dass** der erste Kolben (5) an einem ersten Kontaktpunkt (20a) und der zweite Kolben (7) an einem zweiten Kontaktpunkt (20b) an dem Bremshebel (4) befestigt ist.

9. Zweirad (2), insbesondere Fahrrad, umfassend eine Bremshebelvorrichtung (1) nach einem der vorhergehenden Ansprüche sowie eine über die Bremsleitung (3) mit der Bremshebelvorrichtung (1) gekoppelte Bremsvorrichtung (11), insbesondere einen Bremssattel (12) und eine Bremsscheibe (13), die zum Bremsen eines Rads (14) des Zweirads (2) ausgebildet ist.

**10.** Verfahren zum Ansteuern einer Bremshebelvorrichtung (1) nach einem der Ansprüche 1 bis 3 oder 6 bis 8, wobei auf den Bremshebel (4) eine Handkraft (F_hand) durch einen Benutzer aufgebracht ist, **dadurch gekennzeichnet, dass**
ein Reduzieren eines Bremsdrucks in der Bremsleitung (3),
durch Beaufschlagen des zweiten Kolbens (7) mit dem in der Bremsleitung (3) vorherrschenden Bremsdruck erfolgt, insbesondere durch Schließen des zweiten Ventils (16) und Öffnen des ersten Ventils (15).

**11.** Verfahren nach Anspruch 10, **dadurch gekennzeichnet, dass** das Öffnen des ersten Ventils (15) nach dem Schließen des zweiten Ventils (16) erfolgt.

**12.** Verfahren nach Anspruch 10 oder 11, **gekennzeichnet durch** ein Halten des Bremsdrucks nach der Reduzierung des Bremsdrucks in der Bremsleitung (3) **dadurch, dass** das erste Ventil (15) geschlossen wird, während das zweite Ventil (16) in dem geschlossenen Zustand verbleibt.

**13.** Verfahren nach Anspruch 12, **gekennzeichnet durch** ein Erhöhen des Bremsdrucks nach dem Halten des Bremsdrucks **dadurch, dass** das zweite Ventil (16) geöffnet wird, während das erste Ventil (15) geschlossen bleibt.

**14.** Verfahren nach Anspruch 13, **gekennzeichnet durch** ein Erkennen eines Stillstands eines Rads (14), das durch die mit der Bremshebelvorrichtung (1) verbundene Bremsvorrichtung (11) bremsbar ist und ein wiederholtes Ausführen der Schritte des Reduzierens, Haltens und Erhöhens des Bremsdrucks in der Bremsleitung (3) im Ansprechen auf den erkannten Stillstand.

**Claims**

**1.** Brake lever device (1) for a two-wheeled vehicle (2), having a brake lever (4), which is coupled to a first piston (5) of a first fluid cylinder (6), wherein a first pressure chamber (9) of the first fluid cylinder (6) is directly connected to a brake line (3), and wherein the brake lever device (1) has a valve device (10) with a first valve (15) and a second valve (16), **characterized in that** the brake lever (4) is coupled to a second piston (7) of a second fluid cylinder (8), wherein, by means of the one valve device (10), the second piston (7) can selectively be switched into an unpressurized state and charged with a pressure prevailing in the brake line (3).

**2.** Brake lever device (1) according to Claim 1, **characterized in that** the first valve (15) is designed to selectively connect and separate a second pressure chamber (17) of the second fluid cylinder (8) and the brake line (3), and the second valve (16) is designed to selectively connect and separate the second pressure chamber (17) and a reservoir (18).

**3.** Brake lever device (1) according to Claim 2, **characterized in that** the first pressure chamber (9) and the second pressure chamber (17) are directly connected to the reservoir (18), wherein the connection between the first pressure chamber (9) and reservoir (18) is separable by the first piston (5), and wherein the connection between the second pressure chamber (17) and reservoir (18) is separable by the second piston (7).

**4.** Brake lever device (1) according to Claim 1, **characterized in that** the first valve (15) is designed to selectively connect and separate a third pressure chamber (17a) of the second fluid cylinder (8) and a reservoir (18), and the second valve (16) is designed to selectively connect and separate a fourth pressure chamber (17b) of the second fluid cylinder (8) and the third pressure chamber (17a), wherein the fourth pressure chamber (17b) is separated from the third pressure chamber (17a) by the second piston (7) and is directly connected to the brake line (3).

**5.** Brake lever device (1) according to Claim 4, **characterized in that** the first pressure chamber (9) is directly connected to the reservoir (18), wherein the connection between the first pressure chamber (9) and reservoir (18) is separable by the first piston (5).

**6.** Brake lever device (1) according to either of Claims 2 and 3, **characterized in that**, in a normal operating mode, the first valve (15) is closed and the second valve (16) is open.

**7.** Brake lever device (1) according to any of the preceding claims, **characterized in that** the first piston (5) and the second piston (7) are fastened to the brake lever (4) at the same contact point (20) .

**8.** Brake lever device (1) according to any one of Claims 1 to 6, **characterized in that** the first piston (5) is fastened to the brake lever (4) at a first contact point (20a), and the second piston (7) is fastened to the brake lever (4) at a second contact point (20b).

**9.** Two-wheeled vehicle (2), in particular bicycle, comprising a brake lever device (1) according to any one of the preceding claims and a brake device (11) which is coupled to the brake lever device (1) via the brake line (3), in particular a brake caliper (12) and a brake disc (13), which is designed to brake a wheel (14) of the two-wheeled vehicle (2).

10. Method for actuating a brake lever device (1) according to any one of Claims 1 to 3 or 6 to 8, wherein a hand force (F_hand) is imparted by a user to the brake lever (4), **characterized in that** a reduction of a brake pressure in the brake line (3) occurs by subjecting of the second piston (7) to the brake pressure prevailing in the brake line (3), in particular by closing of the second valve (16) and opening of the first valve (15).

11. Method according to Claim 10, **characterized in that** the opening of the first valve (15) occurs after the closing of the second valve (16).

12. Method according to Claim 10 or 11, **characterized by** holding of the brake pressure, after the reduction of the brake pressure in the brake line (3), by virtue of the first valve (15) being closed whilst the second valve (16) remains in the closed state.

13. Method according to Claim 12, **characterized by** an increase of the brake pressure, after the holding of the brake pressure, by virtue of the second valve (16) being opened whilst the first valve (15) remains closed.

14. Method according to Claim 13, **characterized by** identification of a standstill of a wheel (14) that can be braked by means of the brake device (11) connected to the brake lever device (1), and repeated execution of the steps of reducing, holding and increasing of the brake pressure in the brake line (3) in response to the identified standstill.

**Revendications**

1. Dispositif de levier de frein (1) pour un deux-roues (2), comprenant un levier de frein (4), qui est couplé à un premier piston (5) d'un premier cylindre de fluide (6), une première chambre de pression (9) du premier cylindre de fluide (6) étant connectée directement à une conduite de frein (3), et le dispositif de levier de frein (1) comprenant un dispositif de soupape (10) muni d'une première soupape (15) et d'une deuxième soupape (16), **caractérisé en ce que**
le levier de frein (4) est couplé à un deuxième piston (7) d'un deuxième cylindre de fluide (8),
le deuxième piston (7) pouvant optionnellement être commuté sans pression par le dispositif de soupape (10) et pouvant être sollicité avec une pression régnant dans la conduite de frein (3).

2. Dispositif de levier de frein (1) selon la revendication 1, **caractérisé en ce que** la première soupape (15) est configurée pour la connexion et déconnexion optionnelle d'une deuxième chambre de pression (17)
du deuxième cylindre de fluide (8) et de la conduite de frein (3), et la deuxième soupape (16) est configurée pour la connexion et déconnexion optionnelle de la deuxième chambre de pression (17) et d'un réservoir de stockage (18).

3. Dispositif de levier de frein (1) selon la revendication 2, **caractérisé en ce que** la première chambre de pression (9) et la deuxième chambre de pression (17) sont connectées directement au réservoir de stockage (18), la connexion entre la première chambre de pression (9) et le réservoir de stockage (18) pouvant être déconnectée par le premier piston (5) et la connexion entre la deuxième chambre de pression (17) et le réservoir de stockage (18) pouvant être déconnectée par le deuxième piston (7).

4. Dispositif de levier de frein (1) selon la revendication 1, **caractérisé en ce que** la première soupape (15) est configurée pour la connexion et déconnexion optionnelle d'une troisième chambre de pression (17a) du deuxième cylindre de fluide (8) et d'un réservoir de stockage (18), et la deuxième soupape (16) est configurée pour la connexion et déconnexion optionnelle d'une quatrième chambre de pression (17b) du deuxième cylindre de fluide (8) et de la troisième chambre de pression (17a), la quatrième chambre de pression (17b) pouvant être déconnectée par le deuxième piston (7) de la troisième chambre de pression (17a) et connectée directement à la conduite de frein (3).

5. Dispositif de levier de frein (1) selon la revendication 4, **caractérisé en ce que** la première chambre de pression (9) est connectée directement au réservoir de stockage (18), la connexion entre la première chambre de pression (9) et le réservoir de stockage (18) pouvant être déconnectée par le premier piston (5).

6. Dispositif de levier de frein (1) selon l'une quelconque des revendications 2 ou 3, **caractérisé en ce que**, dans un mode d'exploitation normal, la première soupape (15) est fermée et la deuxième soupape (16) est ouverte.

7. Dispositif de levier de frein (1) selon l'une quelconque des revendications précédentes, **caractérisé en ce que** le premier piston (5) et le deuxième piston (7) sont fixés au levier de frein (4) au même point de contact (20).

8. Dispositif de levier de frein (1) selon l'une quelconque des revendications 1 à 6, **caractérisé en ce que** le premier piston (5) est fixé au levier de frein (4) à un premier point de contact (20a) et le deuxième piston (7) à un deuxième point de contact (20b).

**9.** Deux-roues (2), notamment bicyclette, comprenant un dispositif de levier de frein (1) selon l'une quelconque des revendications précédentes, ainsi qu'un dispositif de frein (11) couplé au dispositif de levier de frein (1) par l'intermédiaire de la conduite de frein (3), notamment un étrier de frein (12) et un disque de frein (13), qui est configuré pour le freinage d'une roue (14) du deux-roues (2).

**10.** Procédé de commande d'un dispositif de levier de frein (1) selon l'une quelconque des revendications 1 à 3 ou 6 à 8, dans lequel une force manuelle (F_hand) est appliquée par un utilisateur au levier de frein (4), **caractérisé en ce qu'**une réduction d'une pression de freinage dans la conduite de frein (3) a lieu par sollicitation du deuxième piston (7) avec la pression de freinage régnant dans la conduite de frein (3), notamment par fermeture de la deuxième soupape (16) et ouverture de la première soupape (15).

**11.** Procédé selon la revendication 10, **caractérisé en ce que** l'ouverture de la première soupape (15) a lieu après la fermeture de la deuxième soupape (16).

**12.** Procédé selon la revendication 10 ou 11, **caractérisé par** un maintien de la pression de freinage après la réduction de la pression de freinage dans la conduite de frein (3), en ce que la première soupape (15) est fermée, tandis que la deuxième soupape (16) reste dans l'état fermé.

**13.** Procédé selon la revendication 12, **caractérisé par** une élévation de la pression de freinage après le maintien de la pression de freinage, en ce que la deuxième soupape (16) est ouverte, tandis que la première soupape (15) reste fermée.

**14.** Procédé selon la revendication 13, **caractérisé par** une détection d'un état d'arrêt d'une roue (14), qui peut être freinée par le dispositif de frein (11) connecté au dispositif de levier de frein (1), et une réalisation répétée des étapes de réduction, maintien et élévation de la pression de freinage dans la conduite de frein (3) en réponse à l'état d'arrêt détecté.

# Fig. 1

**Fig. 2**

EP 3 632 785 B1

Fig. 3

Fig. 4

# Fig. 5

EP 3 632 785 B1

**Fig. 6**

Fig. 7

EP 3 632 785 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4131864 A1
- FR 2738207 A1
- FR 2738204 A1
- WO 2014166336 A1
- US 4315659 A
- US 4456310 A
- US 4494800 A
- DE 102004046940 A1